# EUROPEAN PATENT SPECIFICATION

(11) **EP 2 179 539 B1**
(45) Date of publication and mention of the grant of the patent: **22.10.2014**
(21) Application number: 08796739.4
(22) Date of filing: 29.07.2008
(51) Int. Cl.: H04L 12/18

(54) **METHOD FOR ENABLING MULTICAST TRAFFIC FLOWS OVER HYBRID MULTICAST CAPABLE AND NON-MULTICAST CAPABLE RADIO ACCESS NETWORKS (RANS)**
VERFAHREN ZUR AKTIVIERUNG VON MULTICAST-VERKEHRSFLÜSSEN IN HYBRIDEN MULTICAST-FÄHIGEN UND NICHT MULTICAST-FÄHIGEN FUNKZUGANGSNETZEN
SYSTÈME POUR ACTIVER DES FLUX DE DONNÉES DE TRAFIC MULTIDIFFUSÉS SUR DES RÉSEAUX D'ACCÈS RADIO (RAN)CAPABLES DE MULTIDIFFUSION HYBRIDE ET NON CAPABLES DE MULTIDIFFUSION

(30) Priority: 31.07.2007 US 831485
(43) Date of publication of application: 28.04.2010
(73) Proprietor: Motorola Solutions, Inc., Schaumburg IL 60196 (US)
(72) Inventor: JANNETEAU, Christophe, F-28210 Chaudon (FR); KELLER, Matthew C., Algonquin, Illinois 60102 (US); LEWIS, Adam C., Buffalo Grove, Illinois 60089 (US); POPOVICH, George, Palatine, Illinois 60067 (US)
(74) Representative: Boult Wade Tennant
(86) International application number: PCT/US2008/071408
(87) International publication number: WO 2009/018241

(56) References cited:
- EP-A- 1 725 067
- US-A1- 2003 018 715
- US-A1- 2005 195 774
- US-A1- 2007 086 458
- CHOO Y ET AL: "EFFICIENT MULTICAST SUPPORT EXPLOITING MOBILITY OF HOSTS" IEICE TRANSACTIONS ON COMMUNICATIONS, COMMUNICATIONS SOCIETY, TOKYO, JP, vol. E85B, no. 6, 1 June 2002 (2002-06-01), pages 1213-1217, XP001505927 ISSN: 0916-8516

## Description

### Field of the Invention

The present invention relates generally to wireless networks and more particularly to mobility in wireless networks utilizing multicast communications.

### Background

Internet Protocol (IP) Mobility provides seamless roaming across disparate heterogeneous radio access networks (RANs). As mobile clients or entities (MEs) roam and visit different access networks they engage in communications, sending and receiving various types of data such as voice, text and video. These communications often utilize internet protocol (IP) packet type communication in either a unicast (point-to-point) format or an IP multicast (one point-to-many points) format. One type of data expected to play a significant role in future communication systems (e.g., public safety multimedia systems) is for instance group video that can be sourced to a multicast destination. Those skilled in the art will recognize that there are numerous networks that will not support native multicast since their design generally precludes communications in this format. As such, the router will not replicate this multicast data and it will be dropped by the RAN and thus will not be delivered to the ME. Those skilled in the art will recognize that these types of MEs might include a cellular telephone or two-way radio transceiver that will never receive a multicast packet that could lead to a poor user experience.

There are a number of approaches set forth in the prior art that work to enable mobile users to use multicast communications. One approach known as "bidirectional tunneling" delivers IP multicast packets to a mobile entity (ME) using a unicast tunneling technique. IP tunneling is the process of embedding one IP packet inside of another, for the purpose of simulating a physical connection between two remote networks across an intermediate network. An ME is defined as either a standalone wireless mobile node or a mobile router servicing a mobile network. Bidirectional tunneling operates by conveying the multicast packets inside the unicast Mobile IP (MIP) tunnel between the Mobile IP Home Agent (HA) of the ME and the ME. It should be recognized that this is a form of multicast-in-unicast tunneling. Each time the ME moves, the unicast MIP tunnel is updated with the new care-of address of the ME corresponding to its new attachment point, and the delivery of multicast packets to the ME is maintained.

Similarly, the ME can also source multicast packets by sending them over the unicast tunnel towards its HA. One advantage of this approach is that, thanks to the unicast tunneling, multicast packets can be delivered to/from the ME even when attaching to a non-multicast capable network. On the other hand it introduces significant processing overhead (due to packet replication) on the HA when a large number of MEs need to receive the same multicast group from the HA. The packet replication at the HA also introduces significant overhead in networks visited by multiple MEs listening to the same multicast group since multiple unicast-tunneled copies of the same multicast packet will be sent towards the same visited network.

Another technique for providing multicast communications uses a prior art multicast tunneling technique. By addressing the overheads of the multicast-in-unicast tunneling scheme over multicast-capable networks, U.S. Patent Publication US2007/0086458A1 proposes the use of multicast-in-multicast tunneling between the mobility server (e.g., HA or mobile virtual private network (MVPN) server) and the ME. Advantages of this scheme include the reduced overhead on the mobility server and in the visited network compared to the unicast tunneling scheme. It also allows to provide for an MVPN-like security for multicast traffic, for instance by allowing the use of IPsec to encrypt the multicast tunnel between the mobility server and the ME thus providing confidentiality over public RANs traversed by the multicast packets between the mobility server and the ME. However, this scheme is applicable only when the visited network is multicast-capable.

Still another technique for providing multicast communications uses a technique referred to as Application Layer Multicasting where internet protocol (IP) multicast packets are delivered to mobile users over disparate networks. This technique provides for a multicast proxy between a multicast source and a mobile receiver. The multicast proxy is located at the edge of the access network and delivers IP multicast packets from the source to the mobile receiver either by means of unicast tunneling if the access network does not support multicast or natively if the access network supports multicast. The multicast proxy is statically configured for using either unicast tunneling or native multicast when forwarding multicast packets over the access network it serves based on the multicast capability of the access network. When the mobile receiver moves from one access network to another, it changes a multicast proxy and receives IP multicast packets according to the means supported by the new access network and statically configured in the new multicast proxy. In particular, such a multicast proxy does not dynamically adapt the means by which it forwards multicast packets to a mobile receiver.

In that all of these prior art technique do not address switching between multicast delivery modes (i.e., native multicasting, multicast-in-unicast tunneling, or multicast-in-multicast tunneling) it would be advantageous to offer a multicasting technique allowing mobile entities (nodes or routers) to seamlessly operate in the multicasting mode most optimal for the particular network being visited by the mobile entities.

US patent application publication no. US 2005/0195774 describes an architecture for providing multicast services to mobile users traversing networks with diverse multicast capabilities. Multicast proxies are established in the backbone network and at the edges of the access networks. The back bone proxies form a virtual network using tunnels between neighbouring back proxies. In addition, these proxies can communicate with the media servers and act as gateways to the mobile users. The local proxies are located at the edge of the access network and act as local multicast proxies within the access network. The local proxies determine multicast capabilities of the access networks.

### Summary

In accordance with the present invention, there is provided a method for multicast packet communication by mobile entities using a plurality of radio access networks as recited in the accompanying claims.

### Brief Description of the Figures

The accompanying figures, where like reference numerals refer to identical or functionally similar elements throughout the separate views and which together with the detailed description below are incorporated in and form part of the specification, serve to further illustrate various embodiments and to explain various principles and advantages all in accordance with the present invention.
FIG. 1 is a block diagram illustrating a multicast source utilizing a mobile multicast (MM) server to services differing types of radio access networks using the method in accordance with an embodiment of the invention.
FIG. 2 is a flow chart diagram of a multicasting process using a multicast mobility server.
FIG. 3 is a flow chart diagram of a process where a mobile entity notifies a server of its current multicast capability based on its current RAN attachment.
FIG. 4 is a flow chart diagram of a mobile entity using a bicasting process in accordance with an embodiment of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### Detailed Description

Before describing in detail embodiments that are in accordance with the present invention, it should be observed that the embodiments reside primarily in combinations of method steps and apparatus components related to a method and apparatus for enabling multicast traffic flows over hybrid multicast capable and non-multicast capable radio access networks (RANs). Accordingly, the apparatus components. and method steps have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

In this document, relational terms such as first and second, top and bottom, and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ... a" does not, without more constraints, preclude the existence of additional identical elements in the process, method, article, or apparatus that comprises the element.

It will be appreciated that embodiments of the invention described herein may be comprised of one or more conventional processors and unique stored program instructions that control the one or more processors to implement, in conjunction with certain non-processor circuits, some, most, or all of the functions of a method and apparatus for enabling multicast traffic flows over hybrid multicast capable and non-multicast capable radio access networks (RANs) described herein. The non-processor circuits may include, but are not limited to, a radio receiver, a radio transmitter, signal drivers, clock circuits, power source circuits, and user input devices. As such, these functions may be interpreted as steps of a method to perform a method and apparatus for enabling multicast traffic flows over hybrid multicast capable and non-multicast capable radio access networks (RANs). Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used. Thus, methods and means for these functions have been described herein. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

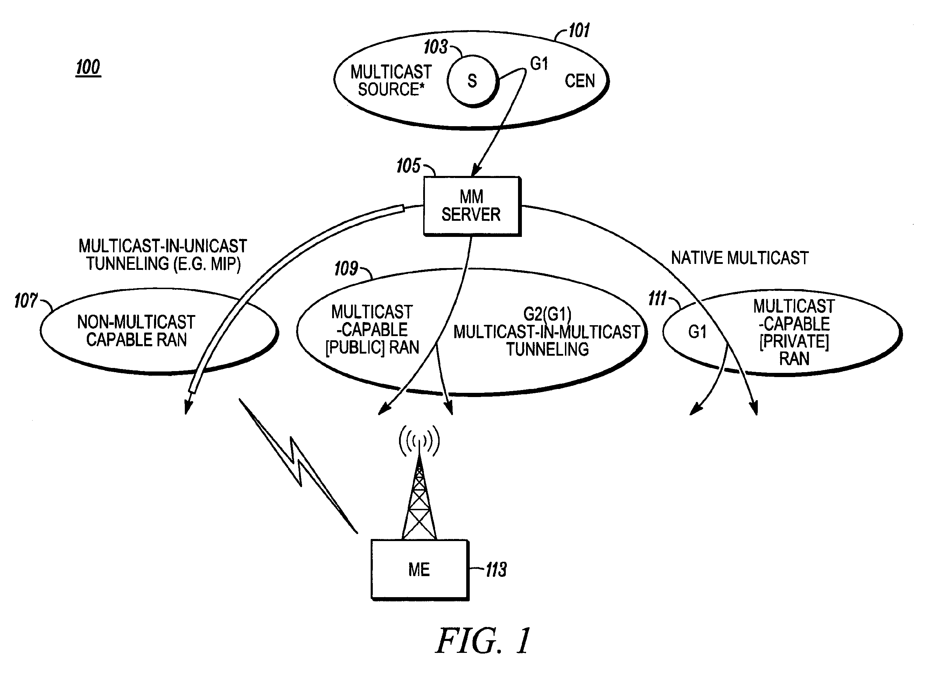

FIG. 1 is a block diagram illustrating a communications network 100 where a multicast source utilizes a mobile multicast (MM) server to service differing types of RANs in accordance with an embodiment of the invention. The communications network 100 includes a central network 101 that includes a multicast source 103 in communication with an MM server 105. A plurality of RANs, such as a non-multicast capable RAN 107, a multicast capable public RAN 109, and a multicast capable private RAN 111, all work in connection with the MM server 105 for providing multicast communications capability. Those skilled in the art will recognize the non-multicast RAN 107 which provides a multicast in-unicast tunneling (e.g., mobile IP (MIP) tunneling) that utilizes infrastructure like Motorola's ASTRO and High Performance Data (HPD) systems as well as Evolution Data Optimized (EVDO) systems. The multicast capable public RAN 109 utilizes multicast-in-multicast tunneling while networks like RAN 111 used a native multicast communicate to a multicast capable private RAN.

The MM server 105 is configured such that the multicast capabilities of each RAN (e.g., RAN 107, RAN 109, and RAN 111) for which it has a connection are identified. Mobile entities like ME 113 operate to communicate in a multicast format with a RAN upon which it is in range. This configuration can be done but is not limited to a port-by-port configurable basis or range of internet protocol (IP) addresses. The MM server maintains a state-full list of MEs and the groups to which they are subscribed. The MM server 105 can maintain this list in a number of different ways, for instance by intercepting subscriptions to multicast groups issued by the ME 113. More precisely, the ME 113 can send its multicast subscription requests (e.g., Internet Group Management Protocol (IGMP) Report messages) for a given group (G1) to the MM server 105, for instance by reverse-tunneling them in the MIP tunnel (or in a Mobile VPN tunnel) to the MM server 105. Using this information the MM server 105 can (1) create a state binding the ME to the group it has registered to and (2) activate multicast routing for this group (e.g., by sending multicast routing messages, or acting as IGMP-proxy) so that multicast packets for this group are routed towards the MM server 105. This enables the MM server 105 to receive the multicast data destined to the MEs apriority.

Those skilled in the art will recognize that the above description is only one example of a possible network configuration. Only key elements are described such as the multicast source, the MM server 105, the ME 113, and a multiplicity of RANs 109 (possibly with different multicast-capabilities) to which the ME 113 can communicate and receive multicast packets (source by the multicast source) from the MM server 105. One key aspect of this network configuration concerns its dynamic adaptation of its delivery mode. Depending on the multicast capabilities of the RAN 107, 109, 111 the ME 113 is attached to (or of the multicast capabilities of the path between MM server 105 and ME 113), the MM server 105 will dynamically adapt its multicast delivery mode to the ME 113 so as to (1) preserve multicast session continuity upon handoff (seamlessness); and (2) optimize MM server 105 and network/RAN resources. In addition, the MM server 105 may also take into account other RAN characteristics (such as whether it is a public or private RAN 109) to select the multicast delivery method to use (for instance preferring multicast-in-multicast tunneling-over native multicasting- in the case of a public multicast-capable RAN 109 since this mode may allow to provide VPN-like security by protecting the multicast tunnel between MM server 105 and ME 113 (e.g., with Internet Protocol Security (IPsec)).

Leveraging off the MM server 105 ability to receive multicast data before the MEs, the MM server 105 is able to use its knowledge of each RAN's multicast capability to either (1) forward the multicast natively outside of any tunnel; (2) forward the multicast inside of a unicast tunnel (for instance over a non-multicast capable access); or (3) forward the multicast inside a multicast tunnel (for instance over a multicast capable access). This intelligence allows all MEs (not shown) to receive multicast data regardless of their RAN's capability, and transparently to the multicast source. Data is routed via native multicast where and when possible (e.g., when an ME is attached to a private/secure multicast-capable network), or tunneled inside multicast (e.g., when ME is attached to a public/non-secure multicast capable network), or tunneled inside unicast elsewhere (e.g., when an ME is attached to a non multicast-capable network).

As noted herein, in one embodiment of the invention, the MM server 105 is statically configured with the multicast capabilities of each RAN 107, 109, 111 for which it has a connection. For instance, in a first enablement, the MM server 105 is configured with a table mapping the range of IP addresses pertaining to a specific RAN to the multicast capability of that RAN. The MM server 105 can then use the care-of address configured by the ME, and for instance communicated to the MM server 105 by the ME using MIP signaling messages, for determining whether the RAN 107, 109, 111 and the ME 113 are currently multicast-capable. As a consequence, the MM server 105 can determine and use the most appropriate multicast delivery method for the ME 113 (e.g., native multicasting, multicast-in-unicast tunneling, or multicast-in-multicast tunneling). In an alternative embodiment of the invention, the MM server 105 works to dynamically retrieves the multicast capabilities of the RAN where the ME 113 is attached by contacting a specific fixed entity in the network either located in the RAN or in another part of the network.

Finally, in yet another embodiment of the invention, an ME (not shown) will notify the MM server 105 of its current multicast capability based on its current RAN attachment. In this case, the present invention introduces a novel signaling message called Multicast Delivery Request used by the ME 113 to indicate to the MM server 105 the multicast delivery mode to be used for delivering multicast packets of a specific multicast group from the MM Server 105 to the ME. The Multicast Delivery Request will include the multicast address or range of multicast addresses for which the request is sent and the desired multicast delivery mode. If the request is sent without specifying the multicast address or a range of addresses, the request is considered as applying for any multicast groups the ME 113 is subscribed to.

The desired multicast delivery mode(s), can be, but are not limited to, any of the following modes: (1) a native multicasting mode is where the MM server 105 forwards the multicast packets using native multicast routing towards the ME; (2) a unicast tunneling mode is where the MM server 105 tunnels multicast packets inside a unicast tunnel towards the ME; (3) a multicast tunneling mode is where the MM server 105 tunnels multicast packets inside a multicast tunnel towards the ME; (4) any combination of the native multicasting, unicast tunneling, or multicast tunneling modes. For instance requesting simultaneous delivery of a multicast group via both unicast tunneling and multicast tunneling (i.e., "bicasting") can allow MM server 105 to discover the multicast capabilities of its new attachment point while ensuring seamless continuation of its ongoing multicast sessions; or (5) a suspend mode is where MM Server 105 suspends the delivery of multicast packets to the ME (via any of the delivery modes) but maintains ME's multicast membership for the multicast group(s). This can be used for instance when the ME 113 anticipates a loss of radio connection (i.e., autonomous mode) in order to reduce the load at its temporary unreachable RAN while maintaining its multicast subscription for faster recovery of the multicast sessions as soon as the radio connectivity becomes available (i.e., return to connected mode).

Those skilled in the art will recognize that future extensions that may introduce new or more specific modes may also be possible. Reference to a "more-specific" mode refers to the ability of the ME 113 to indicate additional parameters for characterizing the mode requested. For example, the ME 113 could request multicast-in-multicast tunneling mode and in addition can request a specific tunneling scheme such as IP tunneling, UDP tunneling, or IPsec encapsulating security payload (ESP) tunneling.

The MM server 105 replies to the ME 113 with a Multicast Delivery Reply message indicating the multicast delivery mode that will actually be used for the multicast group(s) listed in the received Multicast Delivery Request. The reply message can also include additional information that may be required by the ME 113 for receiving multicast packets according to the indicated delivery mode. For instance, when multicast-in-multicast tunneling is to be used, the Reply may contain for instance the IP multicast address used for the multicast tunnel, the IP address of the source of the multicast tunnel (e.g., one of the IP addresses of the MM server), some security materials (e.g., encryption keys) used for securing the multicast tunnel, etc. It should also be recognized that the multicast delivery mode included in the reply may be different from the one requested by the ME 113, for instance if the requested mode cannot be offered to the ME 113 for any reason such as a policy, technical limitation of the MM server 105 or the like.

The MM server 105 can also at any time force a multicast delivery mode for a specific group to a specific ME 113. In this case, the MM server 105 would send a Multicast Delivery Notification message to the ME 113 containing the same type of information as a Multicast Delivery Reply. This can be useful when the MM server 105 detects a technical issue in its neighborhood preventing the use of a specific mode such as a broken multicast infrastructure in the network preventing the use of native multicasting or multicast tunneling modes. This may also be useful in the cases due to a policy based decision, such as taking network usage cost into consideration. In instances where networks may charge additional fees for multicast service, the MM server may base its decision on factors other than technical capability.

The Multicast Delivery Request, Response, and Notification messages can be implemented in a number of different ways; for instance as, but not limited to, extensions of an existing multicast group membership signaling (i.e., Internet Group Management Protocol (IGMP) and Multicast Listener Discovery (MLD) protocols), or as extensions of IP mobility signaling (i.e., Mobile IPv4/v6, NEMOv4/v6 protocols). It should be recognized that these may also be implemented as a completely new protocol. The MM server 105 tracks information about which "multicast delivery mode" is used for each ME 113 and for each multicast groups of the ME 113 in case different modes need to be used for different groups.

An ME 113 can discover the multicast capability of its RAN in a number of different ways that include but are not limited to receiving specific messages from the RAN indicating the RAN multicast capabilities (e.g., in a beacon), by monitoring data traffic on its network interface for eventually detecting multicast packets sent by other nodes, by monitoring multicast signaling on its network interface such as receiving an IGMP Query for the access router; by a user configuration to the way the middleware can discover if it is multicast capable, by a user-configuration to the way the middleware can discover if it is multicast capable, or by retrieving multicast capability from a configuration file based on other characteristics of the RAN such as its type (e.g., its technology type, whether it is a public or private RAN, its operator, etc).

In yet another embodiment of the invention, the ME 113 can use a bicasting mode (i.e., simultaneous use of unicast tunneling and multicast tunneling modes, or simultaneous use of unicast tunneling and native multicast modes) between the MM server 105 and itself to determine the multicast capability at its current point of attachment. More precisely, when an ME 113 moves into a new IP subnet for which it does not know the multicast capability, the ME 113 sends a Multicast Delivery Request to the MM server 105 requesting for the use of the bicasting mode. By detecting multicast packets received over the unicast tunnel, the ME 113 can determine that at least one multicast session is ongoing, and start testing the reception of multicast-in-multicast tunneled packets e.g., for a configurable amount of time.

If no multicast-in-multicast tunneled packets are received, the ME 113 can take this as an indication that multicast is not supported at its current point of attachment, for example, on the path from MM server 105 to the ME 113, and thus send a new Multicast Delivery Request to the MM server 105 requesting for the unicast tunneling mode exclusively. On the other hand, if multicast-in-multicast tunneled packet are received, indicating support of multicast at the current attachment point, the ME 113 can send a Multicast Delivery Request to the MM server 105 requesting for use of the multicast tunneling mode exclusively. Hence, the advantages of the bicasting approach for ME 113 to detect multicast capability of its attachment point is that (1) it is usable in any type of RAN (no extensions in the RAN are needed), and (2) it provide indication on multicast availability on the complete path between MM server 105 and ME 113, and not only at the ME's edge of the path.

It will be recognized that the bicasting mode can also be used to minimize interruption of ongoing multicast sessions as an ME 113 moves between IP subnets. Indeed, even if the ME 113 knows that its new point of attachment is multicast-capable (and thus allows the use of the multicast-tunneling mode or the native multicast mode), the re-establishment of the multicast delivery tree at the new attachment point may introduce some delay (depending on the network topology) and thus impact the ongoing multicast session. By requesting a bicasting mode when entering a new IP subnet, the ME 113 can minimize the interruption of its multicast session (thanks to reception of packets via the unicast tunnel) while the multicast delivery tree (for the multicast tunneling or native multicast modes) is being established.

The MEs and/or MM server can also build states on the multicast capabilities of the care-of-address network prefixes used by the MEs as they roam from one site to another. This allows bypassing the multicast discovery messaging (e.g., requesting of the bicasting mode for multicast capability discovery) for those points of attachment that have been previously visited. This ensures a slow but steady reduction over time in the amount of overhead associated with multicast capability discovery.

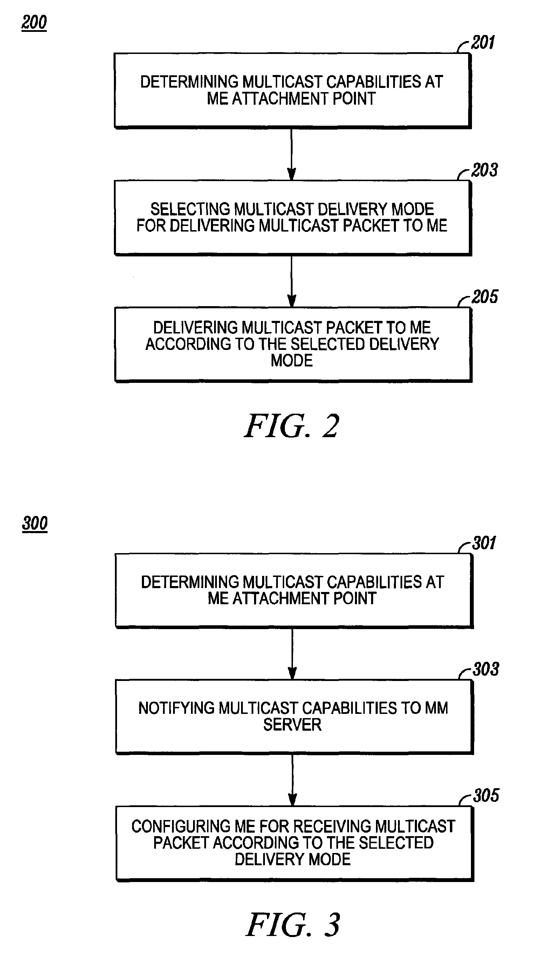

FIG. 2 illustrates a flow chart diagram of the high level multicast communication process as used in an embodiment of the present invention. This process can be triggered by the Multicast Mobility (MM) server in various occasions that includes, but is not limited to, a handover of a mobile entity (ME), such as a change of attachment point; or upon receiving a multicast packet addressed to a multicast group the ME has subscribed to, while MM server does not yet know the multicast delivery mode to be used for the ME at its current location.

The multicast mobility server process 200 includes the steps of determining multicast capabilities at ME attachment point 201. This may include determining multicast capabilities of only a subpart of path between the MM server and the current location of the ME, or determining multicast capabilities of the entire path between the MM server and the current location of the ME. The multicast capabilities determined may include, but are not limited to, the knowledge of whether or not multicast forwarding or routing is supported. It may include other (optional) information such as the type of protocol (e.g., IPv4 or IPv6) for which multicast is supported, any metrics of the routing path from MM server to ME (e.g., in number of hops, or using other metrics), as well as any additional information characterizing the RAN, such as its technology (WiFi, WiMAX, etc.) or its type (public or private RAN) which may be useful in the subsequent step of selecting a multicast delivery mode 203. As noted herein, the process of determining multicast capabilities 201 can be realized through a number of separated embodiments, such as static configuration at an MM server, dynamic discovery from a specific entity in the network, or by receiving a message from the ME such as a Multicast Delivery Request.

The method then selects a multicast delivery mode 203 for delivering a multicast packet to the ME. This selection can be based on various criteria, including the determined multicast capabilities (at the previous step) as well as other information, such as policies (e.g., restriction or preferences in certain delivery modes for a given ME), knowledge of current capabilities of the MM server, or any information characterizing the RAN the ME is attached to. The step of selecting the multicast delivery mode can include another sub-step of informing the ME about the selected multicast delivery mode and communicating (as part of this "informing" step) some parameters to the ME for enabling it to be configured for receiving a multicast packet according to the selected multicast delivery mode. In the case of a multicast-in-multicast tunneling mode, such parameters may be the tunnel multicast address, the source address of the multicast tunnel (MM server address or another), security keys/materials, the type of multicast tunnel (IP tunneling, UDP tunneling, IPsec ESP tunneling), etc. Thereafter, the multicast packet is delivered 205 to the ME according to the selected delivery mode.

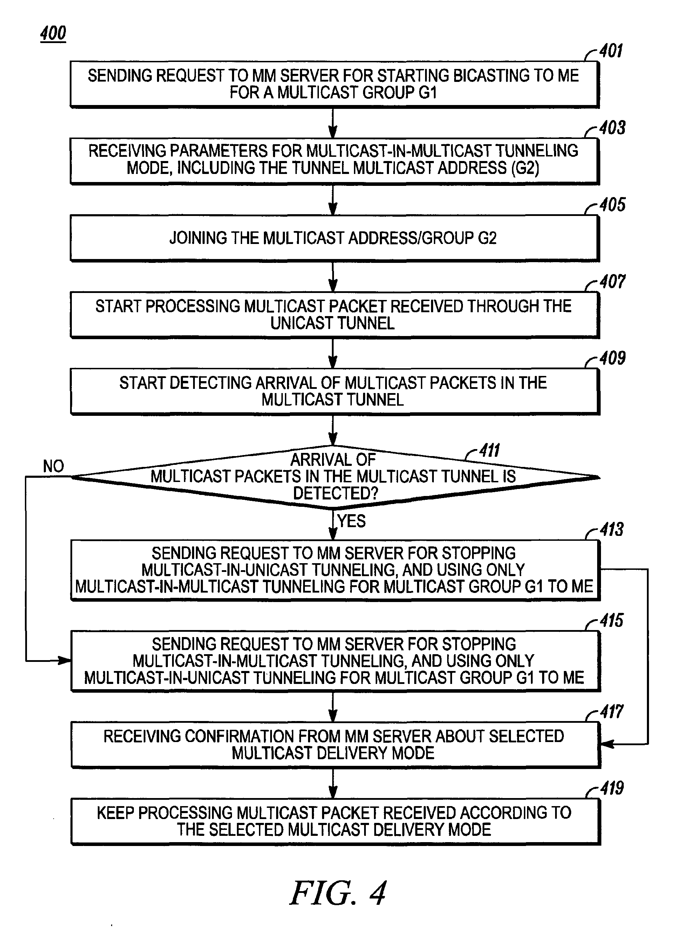

FIG. 3 is a flow chart diagram illustrating the process where ME will notify the MM server of its current multicast capability 300 based on its current RAN attachment. This process can be triggered by the Mobile Entity (ME) in various occasions that may include but are not limited to a handover of ME (change of attachment point), subscribing to a new multicast group via the MM server, detecting a change in the multicast capabilities at its current attachment point (e.g., failure of a local multicast router etc.). This process operates such that the ME notifies the MM server 301 of its current multicast capability based on its current RAN attachment. As noted in the process 200, when determining multicast capabilities at the ME attachment point 301 this may include determining multicast capabilities of only a subpart of the path between the MM server and the current location of the ME, or determining multicast capabilities of the entire path between the MM server and the current location of the ME. The multicast capabilities determined may include, but are not limited to, the knowledge of whether or not multicast forwarding or routing is supported. It may also include other (optional) information such as: type of protocol (e.g., IPv4 or IPv6) for which multicast is supported, metrics of the routing path from MM server to ME (e.g., in number of hops, or using other metrics), as well as any additional information characterizing the RAN, such as its technology (WiFi, WiMAX, etc. or its type (public or private RAN)). As noted herein, the step of determining multicast capabilities 301 can be realized through various embodiments of the invention such as receiving a specific messages from the RAN, monitoring data traffic or multicast signaling on its network interface, or using a bicasting approach discussed in FIG. 4 hereinafter.

Next, the process involves notifying multicast capabilities 303 to the MM server. This step can be realized by sending the multicast capabilities or instead by requesting to the MM server the use of a specific multicast delivery mode for a set of and/or all of the multicast group(s). This refers to the use of a Multicast Delivery Request message and the various possible modes including native Multicasting, unicast tunneling, multicast tunneling or any combination thereof and a Suspend mode.

The ME is then configured 305 for receiving multicast packets according to the selected delivery mode and may include the sub-step of receiving from the MM server the selected multicast delivery mode and any specific parameters for the ME to configure itself for receiving multicast packets according to the selected multicast delivery mode. In the case of multicast-in-multicast tunneling mode, such parameters may be, for instance: the tunnel multicast address, the source address of the multicast tunnel (MM server address or another), some security keys/materials, the type of multicast tunnel such as IP tunneling, UDP tunneling, IPsec ESP tunneling etc. The configuring step would here also include the step for the MM of subscribing to the tunnel multicast address for receiving the multicast-in-multicast tunneled packets.

FIG. 4 is a flow chart diagram illustrating a mobile entity (ME) operations when using a bicasting process 400. Bicasting is the simultaneous use of multicast-in-unicast tunneling and multicast-in-multicast tunneling modes between the MM server and the ME for a given multicast group. The process begins by sending a request to the MM server 401 for starting bicasting to the ME from a multicast group (G1). Parameters for multicast-in-multicast tunneling are received 403 (e.g., from the MM server) that include the tunnel multicast address G2. The ME then joins the tunnel multicast address/group 405 G2 through its current point of attachment to the network. The processing of the multicast packets received though the unicast tunnel is then started at step 407. This processing step 407 can include either (1) passing the data in the received packets to the upper/application layer typically in the case where ME is a standalone Mobile Node (MN) [i.e., when ME is itself the multicast receiver] or (2) forwarding the packets to another node typically in the case when ME is a Mobile Router (MR) and the multicast receiver is a node connected to the MR.

Detecting the arrival of multicast packets is started 409 and may for example involve setting a timer for detecting the arrival of multicast packets in the multicast tunnel. If the timer expires before a given amount of multicast packet(s) is received over the multicast tunnel, the ME can conclude 411 that multicast-in-multicast tunneling cannot be used and proceeds to send a request to the MM server for stopping multicast-in-multicast tunneling and using only multicast-in-unicast tunneling for multicast group to ME 415. Similarly, if before the timer expires a predetermined number of multicast packet(s) has been received over the multicast tunnel, the ME can conclude 411 that multicast-in-multicast tunneling can be used and proceeds to send a request to the MM server 413 for stopping multicast-in-unicast tunneling and using only multicast-in-multicast tunneling for multicast group to the ME. Those skilled in the art will recognize that during this detection process, the ME should drop any multicast packet possibly coming from the multicast tunnel until multicast-in-multicast tunneling is used exclusively in order to avoid processing duplicated packets from the unicast and the multicast tunnel. After sending the request to the MM server at step 413 or step 415, a confirmation is received from the MM server 417 about the selected multicast deliver mode. Thereafter the received multicast packet is continually processed 419 according to the selected multicast delivery mode.

Hence, an embodiment of the invention allows an ME (mobile node or mobile router) to maintain its IP multicast sessions while moving between different visited networks with disparate multicast capabilities. Especially, the invention allows always selecting the most appropriate multicast delivery mode between the MM server and the ME for (1) ensuring seamless continuation of multicast session upon a handoff, and (2) optimizing MM server and network resources when possible. This process enables multicast traffic flows over hybrid multicast capable and non-multicast capable RANs and relies on an intermediary device such as the MM server to have a working knowledge of disparate RAN types and their multicast capabilities, and having the intelligence to forward the multicast traffic to the ME either natively, or inside a unicast, or inside a multicast tunnel, or using any combination of these modes. The MM server works to dynamically adapt the delivery of multicast packets to an ME based on the multicast capability of the RAN the ME is attached to. In a delivery mode, the process can be dynamically adapted each time the ME performs a handoff to select an appropriate mode based on the multicast capability at the new attachment point. This process requires the MM server to intercept all multicast data ahead of the actual MEs/group members and in that it maintains states for each ME, the states refer to the multicast delivery mode to be used for a given ME and eventually multicast group of the ME.

In the foregoing specification, specific embodiments of the present invention have been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of present invention. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

## Claims

1. A method for multicast packet communication by mobile entities using a plurality of radio access networks, RANs, comprising the step of:
receiving a multicast message by at least one router (105), the at least one router (105) being communicatively coupled to a plurality of RANs for providing multicast communication capability, the method being **characterized by**:
determining (201, 301), by a mobile entity, ME, (113) multicast capabilities of at least one network attachment point of the ME (113) based on determining whether or not multicast forwarding and routing is supported by the at least one network attachment point of the ME, wherein the step of determining by the ME multicast capabilities of at least one network attachment point of the ME comprises:
sending by the ME (113) a request to the router (105) for sending at least one multicast packet both within a multicast-in-unicast tunnel and within a multicast-in-multicast tunnel to the ME (113);
detecting by the ME (113) if the at least one multicast packet in a unicast tunnel is received, and determining that a multicast session is ongoing when the at least one multicast packet is received;
detecting by the ME (113) if the at least one multicast packet in a multicast tunnel is received in response to determining an ongoing multicast session;
when the at least one multicast packet is not received in a multicast tunnel, requesting by the ME (113) that the router (105) stops multicast-in-multicast tunneling and uses only multicast-in-unicast tunneling for communicating with the ME (113);
when the at least one multicast packet is received in a multicast tunnel, requesting by the ME (113) that the router (105) stops multicast-in-unicast tunneling and uses only multicast-in-multicast tunneling for communicating with the ME (113);
selecting (203) an optimal multicast delivery mode for delivering the multicast message to the ME (113) at the at least one network attachment point based on the determined multicast capabilities determined by the ME and based on the requests received at the router (105), wherein the multicast delivery mode includes at least one of native multicasting, multicast-in-unicast tunneling, and multicast-in-multicast tunneling; and
delivering (205, 305) the multicast message to the ME (113) at the at least one network attachment point according to the selected delivery mode.

2. A method for multicast packet communication as in claim 1, further comprising the step of:
delivering the multicast message to the ME (113) in an unmodified manner.

3. A method for multicast packet communication as in claim 1, further comprising the step of
delivering the multicast message to the ME (113) within a unicast packet tunnel.

4. A method for multicast packet communication as in claim 1, further comprising the step of:
delivering the multicast message to the ME (113) within a multicast packet tunnel.

5. A method for multicast packet communications as in claim 1, further comprising the step of:
dynamically adapting the delivery mode of the multicast message to the ME (113) based on the multicast capabilities at the ME's network attachment point.

6. A method for multicast packet communications as in claim 1, further comprising the step of:
dynamically adapting the delivery mode of the multicast message at the at least one router (105) each time the ME (113) is handed off to a new network attachment point.

7. A method for multicast packet communications as in claim 1, further comprising the step of:
storing at the at least one router the multicast capabilities of disparate RAN types used in connection with the at least one router (105).

8. A method for multicast packet communications as in claim 1, further comprising the step of:
utilizing other criteria in addition to the determined multicast capabilities, including the cost of network usage, the type of network, or characteristics of the ME (113), as factors in selecting an optimal multicast delivery mode.

9. A method for multicast packet communications as in claim 1, wherein the step of selecting a multicast delivery mode further comprises the step of:
informing the ME (113) about the selected multicast delivery mode.

10. A method for multicast packet communications as in claim 1, wherein the step of determining multicast capabilities further comprises at least one of the steps of:
receiving a specific message from the access network the ME (113) is attached to indicating the multicast capabilities of the access network;
monitoring data traffic or multicast signaling at the network attachment point; and
retrieving multicast capabilities from a configuration file based on other characteristics of the access network such as its type.

11. A method for multicast packet communication as in claim 1, wherein the router is a mobile multicast, MM, server in charge of forwarding multicast packets to mobile entities capable of connecting to both multicast capable and non-multicast capable access networks.

12. A method for multicast packet communications as in claim 1, wherein the native multicasting includes:
forwarding the multicast message natively outside of any tunnel at the router (105).

## Patentansprüche

1. Verfahren zur Multicast-Paketkommunikation durch mobile Entitäten unter Verwendung einer Mehrzahl von Funkzugriffsnetzwerken, RANs, das die folgenden Schritte umfasst:
Empfangen einer Multicast-Nachricht durch mindestens einen Router (105), wobei der mindestens eine Router (105) kommunikativ an eine Mehrzahl von RANs zur Bereitstellung einer Multicast-Kommunikationsfähigkeit gekoppelt ist, wobei das Verfahren **gekennzeichnet ist durch**:
Bestimmen (201, 301), **durch** eine mobile Entität, ME, (113), von Multicast-Fähigkeiten von mindestens einem Netzwerkverbindungspunkt der ME (113), basierend auf einer Bestimmung, ob eine Multicast-Weiterleitung und ein Routing durch den mindestens einen Netzwerkverbindungspunkt der ME unterstützt wird, oder nicht, wobei der Schritt einer Bestimmung von Multicast-Fähigkeiten, **durch** die ME, von mindestens einem Netzwerkverbindungspunkt der ME umfasst:
Senden, **durch** die ME (113), einer Anforderung an den Router (105) zum Senden mindestens eines Multicast-Paketes, sowohl in einem Multicast-in-Unicast-Tunnel als auch in einem Multicast-in-Multicast-Tunnel, an die ME (113);
Erfassen, **durch** die ME (113), ob das mindestens eine Multicast-Paket in einem Unicast-Tunnel empfangen wird, und Bestimmen, dass eine Multicast-Sitzung läuft, wenn das mindestens eine Multicast-Paket empfangen wird;
Erfassen, **durch** die ME (113), ob das mindestens eine Multicast-Paket in einem Multicast-Tunnel in Reaktion auf eine Bestimmung einer laufenden Multicast-Sitzung empfangen wird;
wenn das mindestens eine Multicast-Paket nicht in einem Multicast-Tunnel empfangen wird, Anfordern, **durch** die ME (113), dass der Router (105) ein Multicast-in-Multicast-Tunneln stoppt und ausschließlich ein Multicast-in-Unicast-Tunneln für eine Kommunikation mit der ME (113) verwendet;
wenn das mindestens eine Multicast-Paket in einem Multicast-Tunnel empfangen wird, Anfordern, **durch** die ME (113), dass der Router (105) ein Multicast-in-Unicast-Tunneln stoppt und ausschließlich ein Multicast-in-Multicast-Tunneln zur Kommunikation mit der ME (113) verwendet;
Auswählen (203) einer optimalen Multicast-Auslieferungsbetriebsart zur Auslieferung der Multicast-Nachricht an die ME (113) bei dem mindestens einen Netzwerkverbindungspunkt, basierend auf den **durch** die ME bestimmten Multicast-Fähigkeiten, und basierend auf den Anforderungen, die bei dem Router (105) empfangen werden, wobei die Multicast-Auslieferungsbetriebsart mindestens eines der Folgenden umfasst: natives Multicast, Multicast-in-Unicast-Tunneln und Multicast-in-Multicast-Tunneln; und
Ausliefern (205, 305) der Multicast-Nachricht an die ME (113) bei dem mindestens einen Netzwerkverbindungspunkt gemäß der ausgewählten Auslieferungsbetriebsart.

2. Verfahren zur Multicast-Paketkommunikation gemäß Anspruch 1, das weiterhin den folgenden Schritt umfasst:
Ausliefern der Multicast-Nachricht an die ME (113) auf eine unmodifizierte Art und Weise.

3. Verfahren zur Multicast-Paketkommunikation gemäß Anspruch 1, das weiterhin den folgenden Schritt umfasst:
Ausliefern der Multicast-Nachricht an die ME (113) in einem Unicast-Pakettunnel.

4. Verfahren zur Multicast-Paketkommunikation gemäß Anspruch 1, das weiterhin den folgenden Schritt umfasst:
Ausliefern der Multicast-Nachricht an die ME (113) in einem Multicast-Pakettunnel.

5. Verfahren zu Multicast-Paketkommunikationen gemäß Anspruch 1, das weiterhin den folgenden Schritt umfasst:
dynamisches Anpassen der Auslieferungsbetriebsart der Multicast-Nachricht an die ME (113), basierend auf den Multicast-Fähigkeiten bei dem Netzwerkverbindungspunkt der ME.

6. Verfahren zu Multicast-Paketkommunikationen gemäß Anspruch 1, das weiterhin den folgenden Schritt umfasst:
dynamisches Anpassen der Auslieferungsbetriebsart der Multicast-Nachricht bei dem mindestens einen Router (105), jedes mal, wenn die ME (113) an einen neuen Netzwerkverbindungspunkt weitergeleitet wird.

7. Verfahren zu Multicast-Paketkommunikationen gemäß Anspruch 1, das weiterhin den folgenden Schritt umfasst:
Speichern, bei dem mindestens einen Router, der Multicast-Fähigkeiten von unterschiedlichen RAN-Arten, die in Verbindung mit dem mindestens einen Router (105) verwendet werden.

8. Verfahren zu Multicast-Paketkommunikationen gemäß Anspruch 1, das weiterhin den folgenden Schritt umfasst:
Verwenden weiterer Kriterien, zusätzlich zu den bestimmten Multicast-Fähigkeiten, die umfassen: die Kosten für eine Netzwerknutzung, die Art eines Netzwerkes, oder Merkmale der ME (113), wie Faktoren beim Auswählen einer optimalen Multicast-Auslieferungsbetriebsart.

9. Verfahren zu Multicast-Paketkommunikationen gemäß Anspruch 1, wobei der Schritt eines Auswählens einer Multicast-Auslieferungsbetriebsart weiterhin den folgenden Schritt umfasst:
Informieren der ME (113) über die ausgewählte Multicast-Auslieferungsbetriebsart.

10. Verfahren zu Multicast-Paketkommunikationen gemäß Anspruch 1, wobei der Schritt eines Bestimmens von Multicast-Fähigkeiten weiterhin mindestens einen der folgenden Schritte umfasst:
Empfangen einer spezifischen Nachricht von dem Zugriffsnetzwerk, mit dem die ME (113) verbunden ist, die die Multicast-Fähigkeiten des Zugriffsnetzwerkes anzeigt;
Überwachen eines Datenverkehrs, oder einer Multicast-Signalisierung, bei dem Netzwerkverbindungspunkt; und
Abrufen von Multicast-Fähigkeiten von einer Konfigurationsdatei, basierend auf anderen Merkmalen des Zugriffsnetzwerkes, wie seiner Art.

11. Verfahren zur Multicast-Paketkommunikation gemäß Anspruch 1, wobei der Router ein MM-Server (MM = mobiles Multicast) ist, der für ein Weiterleiten von Multicast-Paketen an mobile Entitäten verantwortlich ist, die in der Lage sind, sich sowohl mit multicastfähigen als auch multicastunfähigen Zugriffsnetzwerken zu verbinden.

12. Verfahren zu Multicast-Paketkommunikationen gemäß Anspruch 1, wobei das native Multicast umfasst:
natives Weiterleiten der Multicast-Nachricht außerhalb irgend eines Tunnels bei dem Router (105).

## Revendications

1. Procédé pour une communication de paquet de multidiffusion par des entités mobiles utilisant une pluralité de réseaux d'accès radio, RAN, comprenant l'étape consistant à :
recevoir un message de multidiffusion par au moins un routeur (105), le au moins un routeur (105) étant couplé de manière communicative à une pluralité de RAN pour fournir une capacité de communication de multidiffusion, le procédé étant **caractérisé par** :
la détermination (201, 301), par une entité mobile, ME, (113) de capacités de multidiffusion d'au moins un point de rattachement au réseau de la ME (113) sur la base de la détermination de si un transfert et un routage de multidiffusion sont supportés par le au moins un point de rattachement au réseau de la ME, où l'étape de détermination par la ME de capacités de multidiffusion d'au moins un point de rattachement au réseau de la ME comprend :
l'envoi par la ME (113) d'une demande au routeur (105) pour envoyer au moins un paquet de multidiffusion à la fois à l'intérieur d'un tunnel multidiffusion-dans-unidiffusion et à l'intérieur d'un tunnel multidiffusion-dans-multidiffusion à la ME (113) ;
la détection par la ME (113) de si le au moins un paquet de multidiffusion dans un tunnel d'unidiffusion est reçu, et la détermination qu'une session de multidiffusion est en cours lorsque le au moins un paquet de multidiffusion est reçu ;
la détection par la ME (113) de si le au moins un paquet de multidiffusion dans un tunnel de multidiffusion est reçu en réponse à la détermination d'une session de multidiffusion en cours ;
lorsque le au moins un paquet de multidiffusion n'est pas reçu dans un tunnel de multidiffusion, la demande par la ME (113) que le routeur (105) arrête la tunnellisation multidiffusion-dans-multidiffusion et utilise uniquement la tunnellisation multidiffusion-dans-unidiffusion pour communiquer avec la ME (113) ;
lorsque le au moins un paquet de multidiffusion est reçu dans un tunnel de multidiffusion, la demande par la ME (113) que le routeur (105) arrête la tunnellisation multidiffusion-dans-unidiffusion et utilise uniquement la tunnellisation multidiffusion-dans-multidiffusion pour communiquer avec la ME (113) ;
la sélection (203) d'un mode de remise de multidiffusion optimal pour remettre le message de multidiffusion à la ME (113) au niveau du au moins un point de rattachement au réseau sur la base des capacités de multidiffusion déterminées par la ME et sur la base des demandes reçues au niveau du routeur (105), où le mode de remise de multidiffusion comprend au moins une parmi la multidiffusion native, la tunnellisation multidiffusion-dans-unidiffusion, et la tunnellisation multidiffusion-dans-multidiffusion ; et
la remise (205, 305) du message de multidiffusion à la ME (113) au niveau du au moins un point de rattachement au réseau en fonction du mode de remise sélectionné.

2. Procédé pour une communication de paquet de multidiffusion selon la revendication 1, comprenant en outre l'étape consistant à :
remettre le message de multidiffusion à la ME (113) d'une manière non modifiée.

3. Procédé pour une communication de paquet de multidiffusion selon la revendication 1, comprenant en outre l'étape consistant à :
remettre le message de multidiffusion à la ME (113) à l'intérieur d'un tunnel de paquet d'unidiffusion.

4. Procédé pour une communication de paquet de multidiffusion selon la revendication 1, comprenant en outre l'étape consistant à :
remettre le message de multidiffusion à la ME (113) à l'intérieur d'un tunnel de paquet de multidiffusion.

5. Procédé pour des communications de paquets de multidiffusion selon la revendication 1, comprenant en outre l'étape consistant à :
adapter dynamiquement le mode de remise du message de multidiffusion à la ME (113) sur la base des capacités de multidiffusion au niveau du point de rattachement au réseau de la ME.

6. Procédé pour des communications de paquets de multidiffusion selon la revendication 1, comprenant en outre l'étape consistant à :
adapter dynamiquement le mode de remise du message de multidiffusion au niveau du au moins un routeur (105) chaque fois que la ME (113) est transférée à un nouveau point de rattachement au réseau.

7. Procédé pour des communications de paquets de multidiffusion selon la revendication 1, comprenant en outre l'étape consistant à :
stocker au niveau du au moins un routeur les capacités de multidiffusion de types de RAN disparates utilisés en connexion avec le au moins un routeur (105).

8. Procédé pour des communications de paquets de multidiffusion selon la revendication 1, comprenant en outre l'étape consistant à :
utiliser d'autres critères en plus des capacités de multidiffusion déterminées, comprenant le coût de l'utilisation du réseau, le type de réseau, ou des caractéristiques de la ME (113), en tant que facteurs dans la sélection d'un mode de remise de multidiffusion optimal.

9. Procédé pour des communications de paquets de multidiffusion selon la revendication 1, dans lequel l'étape de sélection d'un mode de remise de multidiffusion comprend en outre l'étape consistant à :
informer la ME (113) du mode de remise de multidiffusion sélectionné.

10. Procédé pour des communications de paquets de multidiffusion selon la revendication 1, dans lequel l'étape de détermination de capacités de multidiffusion comprend en outre au moins une des étapes consistant à :
recevoir un message spécifique du réseau d'accès auquel la ME (113) est rattachée pour indiquer les capacités de multidiffusion du réseau d'accès ;
surveiller un trafic de données ou une signalisation de multidiffusion au niveau du point de rattachement au réseau ; et
récupérer des capacités de multidiffusion à partir d'un fichier de configuration sur la base d'autres caractéristiques du réseau d'accès comme son type.

11. Procédé pour une communication de paquet de multidiffusion selon la revendication 1, dans lequel le routeur est un serveur de multidiffusion mobile, MM, en charge de transférer des paquets de multidiffusion à des entités mobiles capables de se connecter à la fois à des réseaux d'accès capables de multidiffusion et non capables de multidiffusion.

12. Procédé pour des communications de paquets de multidiffusion selon la revendication 1, dans lequel la multidiffusion native comprend :
le transfert du message de multidiffusion nativement en dehors de tout tunnel au niveau du routeur (105).
